# EUROPEAN PATENT SPECIFICATION

(11) **EP 3 725 636 B1**
(45) Date of publication and mention of the grant of the patent: **01.02.2023**
(21) Application number: 18889563.5
(22) Date of filing: 09.11.2018
(51) Int. Cl.: B61D 27/00, B60L 1/02, B60H 1/32, F24F 11/48, F25B 41/20, F25B 41/24

(54) **AIR CONDITIONING DEVICE FOR RAILWAY VEHICLE AND AIR CONDITIONING METHOD FOR RAILWAY VEHICLE**
KLIMAANLAGE FÜR EIN SCHIENENFAHRZEUG UND VERFAHREN ZUR KLIMATISIERUNG EINES SCHIENENFAHRZEUGES
DISPOSITIF DE CLIMATISATION POUR VÉHICULE FERROVIAIRE ET PROCÉDÉ DE CLIMATISATION POUR VÉHICULE FERROVIAIRE

(30) Priority: 15.12.2017 JP 2017241009
(43) Date of publication of application: 21.10.2020
(73) Proprietor: Mitsubishi Electric Corporation, Tokyo 100-8310 (JP)
(72) Inventor: SHINGU, Wahei, Tokyo 100-8310 (JP)
(74) Representative: Studio Torta S.p.A.
(86) International application number: PCT/JP2018/041739
(87) International publication number: WO 2019/116801

(56) References cited:
- EP-A2- 2 463 602
- DE-A1-102014 224 922
- JP-A- 2014 172 432
- JP-A- 2017 045 700

## Description

### Technical Field

The present disclosure relates to a railway vehicle with an air conditioning apparatus and an air conditioning method for the railway vehicle.

### Background Art

An air conditioner that performs indoor air conditioning in a room provides a refrigeration cycle by inclusion of a compressor that compresses refrigerant, thereby attaining heat generation or coolness required for performance of the air conditioning. In the air conditioner, the refrigerant may accumulate in liquid form in the compressor while the compressor is stopped and dissolve in lubricating oil in the compressor.

Such a case leads to dilution of the lubricating oil by the refrigerant, and may cause galling at portions of the compressor where members thereof slide against one another upon activation of the compressor. Further, such a case may also lead to overloading of the compressor as the compressor tries to compress the liquid refrigerant accumulated in the compressor.

Thus, as disclosed in Patent Literature 1, an air conditioning device that includes a heater for heating a compressor is proposed. Heating the compressor by use of the heater before activating the compressor enables gasification of refrigerant accumulated in the compressor and separation of the refrigerant from the lubricating oil, thereby preventing or reducing occurrence of the galling and overloading described above.

### Citation List

### Patent Literature

Patent Literature 1: Unexamined Japanese Patent Application Kokai Publication No. H8-261571
Patent Literature 2: JP 2017 045700
Patent Literature 3: JP 2014 172432

### Summary of Invention

### Technical Problem

However, in a railway vehicle, not only a compressor but also a heater that heats the compressor is required to be supplied power from an overhead line. As a pantograph is lowered after operation of the railway vehicle ends, power supply from the overhead line to the heater cannot be achieved despite the stopped state of the compressor.

That is to say, in the railway vehicle, the heater provided for heating the compressor cannot heat the compressor until the pantograph is raised and is electrically connected to the overhead line. This creates difficulty in preventing or reducing the occurrence of galling and overloading described above to achieve long lasting use of the compressor.

An objective of the present disclosure is to provide an air conditioning apparatus for a railway vehicle and an air conditioning method for the railway vehicle that enable long lasting use of a compressor installed in the railway vehicle.

### Solution to Problem

In order to achieve the aforementioned objective, a rail vehicle with the technical features of claim 1 is disclosed.

### Advantageous Effects of Invention

The above-described configuration enables power stored in the power storage device to be supplied to the compressor heater to achieve heating of the compressor by the compressor heater during a time period in which the compressor is stopped due to interruption of power supply from the overhead line to the railway vehicle.

This facilitates gasification of the refrigerant in the compressor, preventing occurrence of malfunction of the compressor caused by accumulation of the liquid refrigerant in the compressor. Thus, long lasting use of a compressor installed in a railway vehicle can be achieved.

### Brief Description of Drawings

FIG. 1 is a schematic diagram illustrating an arrangement of an air conditioning apparatus for a railway vehicle according to Embodiment 1;
FIG. 2 is a schematic diagram illustrating a configuration of an air conditioning device according to Embodiment 1;
FIG. 3 is a schematic diagram illustrating a main part of the air conditioning apparatus for a railway vehicle according to Embodiment 1;
FIG. 4 is a flowchart illustrating charging-discharging control according to Embodiment 1;
FIG. 5 is a schematic diagram illustrating a main part of an air conditioning apparatus for a railway vehicle according to Embodiment 2;
FIG. 6 is a flowchart illustrating charging-discharging control according to Embodiment 2;
FIG. 7 is a flowchart illustrating charging-discharging control according to Embodiment 3;
FIG. 8 is a schematic diagram illustrating a main part of an air conditioning apparatus for a railway vehicle according to Embodiment 4;
FIG. 9 is a flowchart illustrating charging-discharging control according to Embodiment 4;
FIG. 10 is a flowchart illustrating charging-discharging control according to Embodiment 5; and
FIG. 11 is a schematic diagram illustrating a main part of an air conditioning apparatus for a railway vehicle according to Embodiment 6.

### Description of Embodiments

Hereinafter Embodiments 1-6 of an air conditioning apparatus for a railway vehicle according to the present disclosure are described with reference to the drawings. In the drawings, components having the same or equivalent are assigned the same reference signs.

### Embodiment 1

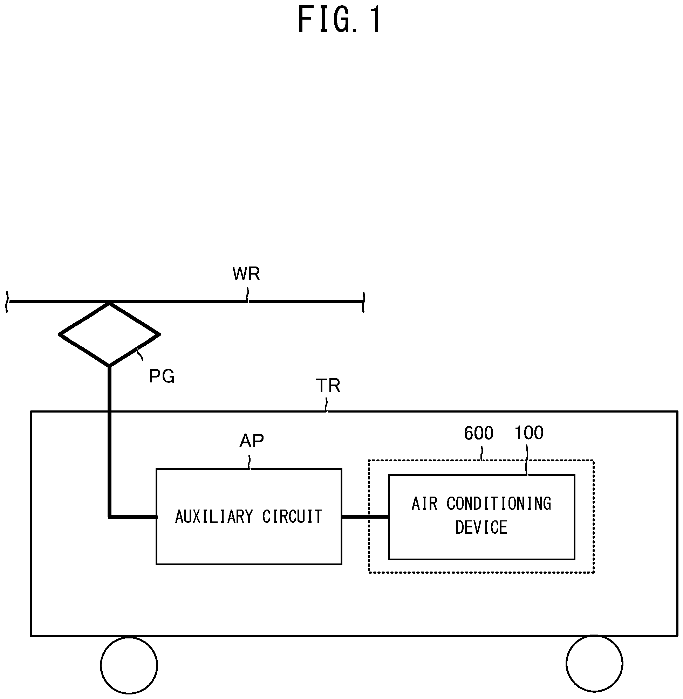

As illustrated in FIG. 1, an air conditioning apparatus 600 for a railway vehicle according to the present embodiment is installed in a railway vehicle TR. The railway vehicle TR includes a pantograph PG that is to be brought electrically into contact with an overhead line WR and functions as a current collector, and an auxiliary circuit AP that functions as a power supply circuit for converting power supplied from the overhead line WR via the pantograph PG into a form consumable by equipment devices installed in the vehicle.

In the present embodiment, the auxiliary circuit AP includes a power inverter to convert direct-current power supplied from the overhead line WR via the pantograph PG into an alternating-current form. The equipment devices to which the auxiliary circuit AP supplies power are various loads installed in the railway vehicle TR other than a traction motor for propelling the railway vehicle TR.

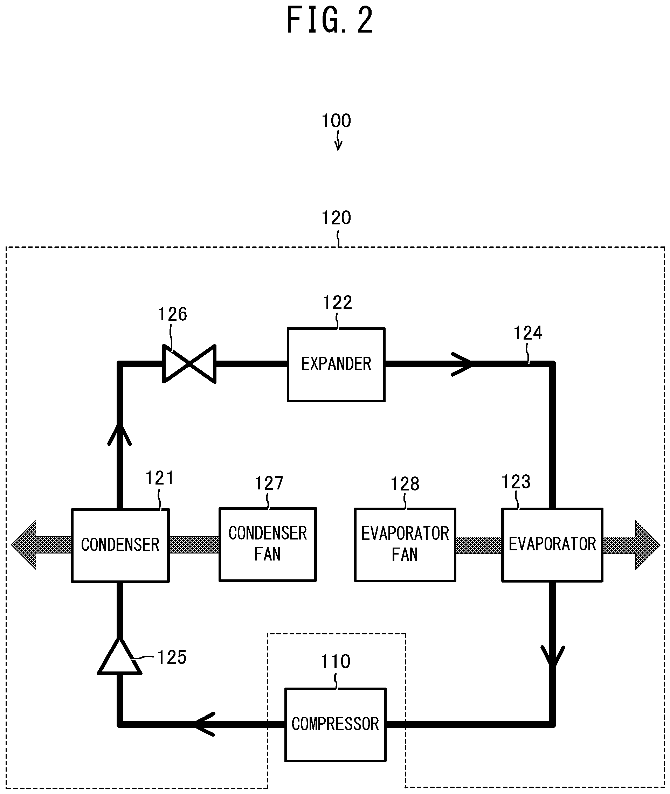

The air conditioning apparatus 600 includes an air conditioning device 100 that is supplied power from the auxiliary circuit AP. The air conditioning device 100 performs air conditioning of a passenger compartment of the railway vehicle TR. Hereinafter a configuration of the air conditioning device 100 is described in detail with reference to FIG. 2.

As illustrated in FIG. 2, the air conditioning device 100 includes a compressor 110 that compresses refrigerant and a cooperating devices group 120 that forms, together with the compressor 110, a refrigeration cycle in which the refrigerant circulates for performing air conditioning of a passenger compartment of the railway vehicle TR.

The cooperating devices group 120 includes a condenser 121 that condenses the refrigerant compressed by the compressor 110, an expander 122 that expands the condensed refrigerant, an evaporator 123 that evaporates the expanded refrigerant and returns the evaporated refrigerant to the compressor 110, and a refrigerant piping 124 that circulates the refrigerant through the condenser 121, the expander 122 and the evaporator 123.

The cooperating devices group 120 further includes a check valve 125 that is arranged on the refrigerant piping 124 provided from the compressor 110 to the condenser 121 and a liquid line electromagnetic valve 126 that is arranged on the refrigerant piping 124 provided between the condenser 121 and the expander 122.

The check valve 125 prevents the refrigerant in liquid form from counterflowing from the condenser 121 into the compressor 110. The liquid line electromagnetic valve 126 limits an amount of the liquid refrigerant flowing from the condenser 121 to the expander 122 and prevents, during operation stoppage of the compressor 110, the liquid refrigerant from moving in the refrigerant piping 124.

The cooperating devices group 120 further includes a condenser fan 127 that facilitates heat exchange with air performed by the condenser 121 and an evaporator fan 128 that facilitates heat exchange with air performed by the evaporator 123. In performing heating, the condenser fan 127 blows heated air obtained by heat exchange performed by the condenser 121 to the passenger compartment of the railway vehicle TR. In performing cooling, the evaporator fan 128 blows cooled air obtained by heat exchange performed by the evaporator 123 to the passenger compartment of the railway vehicle TR.

The condenser fan 127 and the evaporator fan 128 are supplied power via the auxiliary circuit AP of FIG. 1 to operate. Similarly, the compressor 110 is supplied via the auxiliary circuit AP of FIG. 1 to operate.

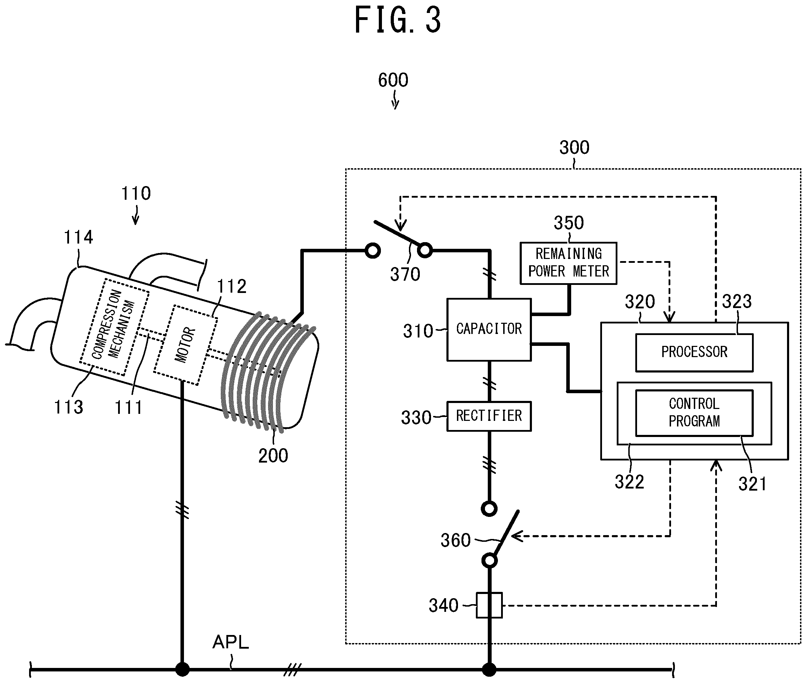

As illustrated in FIG. 3, the compressor 110 includes a drive shaft 111, a motor 112 that rotates the drive shaft 111, a compression mechanism 113 that compresses the refrigerant using rotation of the drive shaft 111, and a housing 114 to house the drive shaft 111, the motor 112 and the compression mechanism 113. The motor 112 is electrically connected to a power supply line APL that is a part of the auxiliary circuit AP of FIG. 1, and is supplied power via the power supply line APL to operate.

The compressor 110 is arranged sideways, that is, arranged such that the drive shaft 111 inclines with respect to the vertical direction. Further, although not illustrated, lubricating oil is accumulated at portions in the housing 114 of the compressor 110 that may come in contact with the refrigerant. The lubricating oil reduces friction that occurs at a bearing of the drive shaft 111 and portions of the compression mechanism 113 where members thereof slide against one another.

In employing the above-described compressor 110, the refrigerant may accumulate in liquid form in the housing 114 during interruption of power supply from power supply line APL to the motor 112 and dissolve in the lubricating oil in the housing 114. Arranging the compressor 110 sideways leads to a larger contact surface area between the lubricating oil and the refrigerant than in arranging upright, increasing the likelihood that the refrigerant dissolves in the lubricating oil.

Occurrence of dissolution of the refrigerant in the lubricating oil leads to dilution of the lubricating oil by the refrigerant, and may cause occurrence of galling at the bearing of the drive shaft 111 and in the compression mechanism 113 upon activation of the motor 112. Further, such a case may lead to overloading of the motor 112 as the compression mechanism 113 tries to compress the liquid refrigerant accumulated in the housing 114.

Thus, in the present embodiment, the housing 114 is heated to prevent or reduce accumulation of the liquid refrigerant in the housing 114. Hereinafter this configuration is described in detail with reference to FIG. 3.

As illustrated in FIG. 3, the air conditioning apparatus 600 according to the present embodiment includes a compressor heater 200 that is supplied power from an exterior to heat the compressor 110 and a power storage device 300 that supplies power to the compressor heater 200.

The compressor heater 200 includes a resistance heating element that converts power supplied from the exterior to Joule heat. The compressor heater 200 is attached to the outer surface of the housing 114 of the compressor 110 to heat at least the portion of the compressor 110 where the lubricating oil is accumulated.

The power storage device 300 includes a capacitor 310 that stores power to be supplied to the compressor heater 200 and a controller 320 that performs charging-discharging control for controlling the timings at which charging of and discharging from the capacitor 310 are performed. The capacitor 310 is electrically connected to the auxiliary circuit AP of FIG. 1 via the power supply line APL.

The power storage device 300 further includes a rectifier 330 arranged on a transmission line extending from the power supply line APL to the capacitor 310. The rectifier 330 rectifies a three-phase alternating-current voltage supplied from the power supply line APL. A direct-current voltage obtained by rectification performed by the rectifier 330 charges the capacitor 310.

In the present embodiment, the capacitor 310 has a storage capacity that enables supplying, for a time period no less than a time period from the end of operation of the railway vehicle TR to the start of operation of the railway vehicle TR, to the compressor heater 200 power for allowing the compressor heater 200 to generate heat in an amount sufficient for facilitating gasification of the refrigerant accumulated in the compressor 110.

The power storage device 300 further includes an electrification detector 340 arranged on the transmission line extending from the power supply line APL to the capacitor 310. The electrification detector 340 detects whether the capacitor 310 is chargeable from the power supply line APL. Specifically, the electrification detector 340 detects whether electrical potential of the power supply line APL is greater than or equal to a predetermined value.

The power storage device 300 further includes a remaining power meter 350 that detects how much power remains left in the capacitor 310. The controller 320 determines, when performing the charging-discharging control, whether a remaining amount of power in the capacitor 310 reaches an upper limit indicating that the capacitor 310 is sufficiently charged and whether a remaining amount of power in the capacitor 310 reaches a lower limit indicating the lowest acceptable value.

The power storage device 300 further includes a charging switch 360 arranged on the transmission line extending from the power supply line APL to the capacitor 310 and a discharging switch 370 arranged on a transmission line extending from the capacitor 310 to the compressor heater 200.

When the charging switch 360 is turned on, charging of the capacitor 310 starts. When the charging switch 360 is turned off, charging of the capacitor 310 stops. When the discharging switch 370 is turned on, discharging from the capacitor 310 to the compressor heater 200 starts. When the discharging switch 370 is turned off, discharging from the capacitor 310 to the compressor heater 200 stops.

The controller 320 controls, when performing the above-described charging-discharging control, the charging switch 360 and the discharging switch 370 based on detection results obtained by the electrification detector 340 and the remaining power meter 350. Further, the controller 320 is also supplied power from the capacitor 310 to operate. This allows the controller 320 to operate even after interruption of power supply from the power supply line APL.

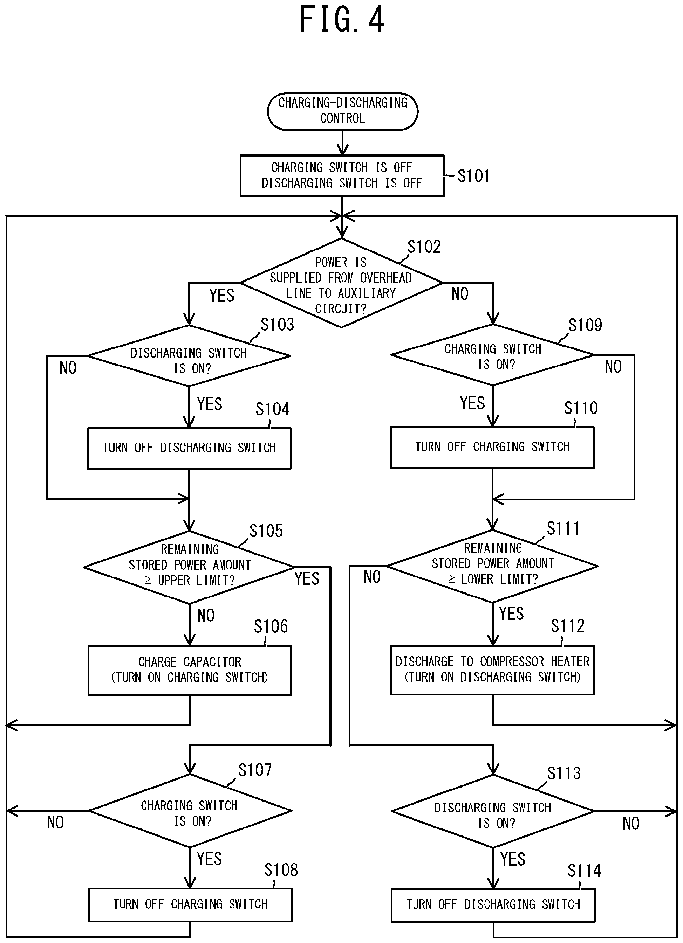

The controller 320 includes a memory 322 that stores a control program 321 defining operations to be performed in the charging-discharging control and a processor 323 that reads the control program 321 from the memory 322 and executes the control program 321. The processor 323 executes the control program 321 to achieve the charging-discharging control. Hereinafter the charging-discharging control is described in detail with reference to FIG. 4.

As illustrated in FIG. 4, in the present embodiment, both the charging switch 360 and the discharging switch 370 are taken to be in an off-state (step S101).

First, the processor 323 determines, based on the detection result obtained by the electrification detector 340, whether power is being supplied from the overhead line WR to the auxiliary circuit AP (step S102). When the detection results obtained by the electrification detector 340 indicates that power being supplied to the power supply line APL has a value greater than or equal to a predetermined value, the processor 323 determines that power is being supplied from the overhead line WR to the auxiliary circuit AP. When the detection results obtained by the electrification detector 340 indicate that power being supplied to the power supply line APL has a value less than the predetermined value, the processor 323 determines that the power supply from the overhead line WR to the auxiliary circuit AP is interrupted.

Here, when the compressor 110 is being supplied power from the auxiliary circuit AP and is operating, heating of the compressor 110 need not be performed. Thus, when power is being supplied from the overhead line WR to the auxiliary circuit AP (Yes in step S102), the processor 323 determines whether the discharging switch 370 is in an on-state (step S103), and when the discharging switch 370 is in the on-state (Yes in step S103), turns off the discharging switch 370 (step S104).

When the discharging switch 370 is turned off in step S104 or when the discharging switch 370 is in the off-state in step S103 (No in step S103), the processor 323 checks whether charging of the capacitor 310 is completed.

Specifically, the processor 323 determines, based on the detection result obtained by the remaining power meter 350, whether a remaining amount of power stored in the capacitor 310 (hereinafter the amount is referred to as a remaining stored power amount) is greater than or equal to an upper limit indicating that the capacitor 310 is sufficiently charged (step S105).

When the remaining stored power amount in the capacitor 310 is lower than the upper limit (No in step S105), the processor 323 turns on the charging switch 360 to start charging of the capacitor 310 (step S106), and then the processing returns to step S102. This allows, during a time period in which power is being supplied from the overhead line WR to the auxiliary circuit AP, continuous charging of the capacitor 310 until a remaining stored power amount reaches the upper limit.

Here, in performing charging of the capacitor 310 in step S106, the compressor 110 is operating using power supplied from the power supply line APL as power is supplied from the overhead line WR to the auxiliary circuit AP. Thus, a portion of power supplied from the overhead line WR to the auxiliary circuit AP that enables operation of the compressor 110 is stored in the capacitor 310 during operation of the compressor 110.

On the other hand, when the remaining stored power amount in the capacitor 310 is greater than or equal to the upper limit in step S105 (Yes in step S105), the processor 323 determines whether the charging switch 360 is in an on-state (step S107). When the charging switch 360 is in the on-state (Yes in step S107), the processor 323 turns off the charging switch 360 (step S108), and then the processing returns to step S102. When the charging switch 360 is in the off-state (No in step S107), the processing directly returns to step S102.

As described above, when the remaining stored power amount in the capacitor 310 reaches the upper limit, the charging switch 360 is turned off in step S 108. This prevents the power supply line APL from applying voltage to the capacitor 310 for a time period no less than necessary, thereby slowing deterioration of the capacitor 310.

On the other hand, when the processor 323 determines in step S102 that the power supply from the overhead line WR to the auxiliary circuit AP is interrupted (No in step S102), this determination result indicates that the compressor 110 is stopped by the pantograph PG being lowered after the end of operation of the railway vehicle TR. In such a case, the processor 323 performs the following steps.

First, to prevent unnecessary discharging from the capacitor 310 to the power supply line APL, the processor 323 determines whether the charging switch 360 is in the on-state (step S109). When the charging switch 360 is in the on-state (Yes in step S109), the processor 323 turns off the charging switch 360 (step S110).

When turning off the charging switch 360 in step S110 or when the charging switch 360 is in the off-state in step S109 (No in step S109), the processor 323 checks whether power can be supplied to the compressor heater 200. Specifically, the processor 323 determines, based on the detection result obtained by the remaining power meter 350, whether the remaining stored power amount in the capacitor 310 is greater than or equal to the lower limit indicating the lowest acceptable value (step S111).

Next, when the remaining stored power amount in the capacitor 310 is greater than or equal to the lower limit (Yes in step S111), the processor 323 turns on the discharging switch 370 to start discharging from the capacitor 310 to the compressor heater 200 (step S112), and then the processing returns to step S102.

This allows continuous power supply from the capacitor 310 to the compressor heater 200 until power supply from the overhead line WR to the auxiliary circuit AP resumes by the pantograph PG being raised or the remaining stored power amount reaches the lower limit.

As described above, the capacitor 310 has a storage capacity that enables supplying power to the compressor heater 200 for a time period no less than a time period from the end of operation of the railway vehicle TR to the start of operation of the railway vehicle TR. This, in principle, allows continuous power supply from the capacitor 310 to the compressor heater 200 until power supply from the overhead line WR to the auxiliary circuit AP resumes by the pantograph PG being raised.

However, the remaining stored power amount in the capacitor 310 might reach the lower limit during interruption of power supply from the overhead line WR to the auxiliary circuit AP in case of insufficient charging of the capacitor 310 during the latest operating time period of the railway vehicle TR or extension of the time period from the end of operation of the railway vehicle TR to the start of operation of the railway vehicle TR.

Thus, when the remaining stored power amount in the capacitor 310 reaches the lower limit in step S 111 (No in step S111), the processor 323 determines whether the discharging switch 370 is in the on-state (step S113). When the discharging switch 370 is in the on-state (Yes in step S113), the processor 323 turns off the discharging switch 370 (step S114), and then the processing returns to step S102. When the discharging switch 370 is in the off-state (No in step S113), the processing directly returns to step S102.

Turning off the discharging switch 370 in step S114 allows the capacitor 310 to have remaining stored power amount that is about the lower limit. This lowers the probability of occurrence of interruption of power supply from the capacitor 310 to the processor 323 to be used for performing the charging-discharging control even in interruption of power supply from the overhead line WR to the auxiliary circuit AP.

As described above, in the present embodiment, power stored in the capacitor 310 is supplied to the compressor heater 200 during a time period in which the compressor 110 is stopped due to interruption of power supply from the overhead line WR to the railway vehicle TR, thereby allowing the compressor heater 200 to heat the compressor 110. Such configuration facilitates gasification of the refrigerant in the compressor 110, and prevents occurrence of malfunction of the compressor 110 caused by accumulation of the liquid refrigerant in the compressor 110, thereby achieving long lasting use of the compressor 110 installed in the railway vehicle TR.

### Embodiment 2

Although a timing at which power supply from the capacitor 310 to the compressor heater 200 stops is determined based on the detection result obtained by the electrification detector 340 in Embodiment 1 described above, the timing at which power supply from the capacitor 310 to the compressor heater 200 stops may be determined based on an elapsed time. A case of employing such configuration is described below.

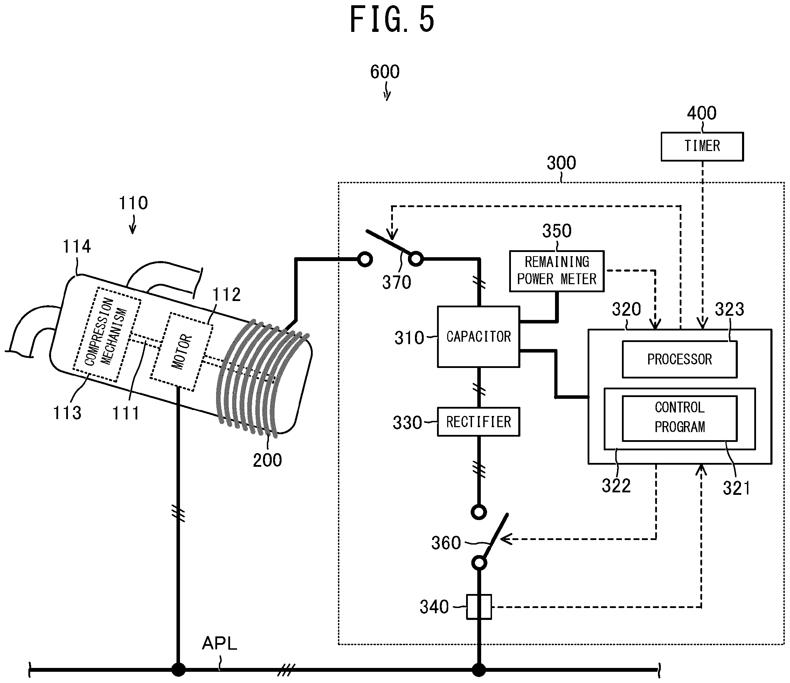

As illustrated in FIG. 5, the air conditioning apparatus 600 according to the present embodiment further includes a timer 400 that functions as timer means for measuring elapsed time. The timer 400 measures elapsed time from the time point at which the processor 323 instructs the timer 400 to start time measurement.

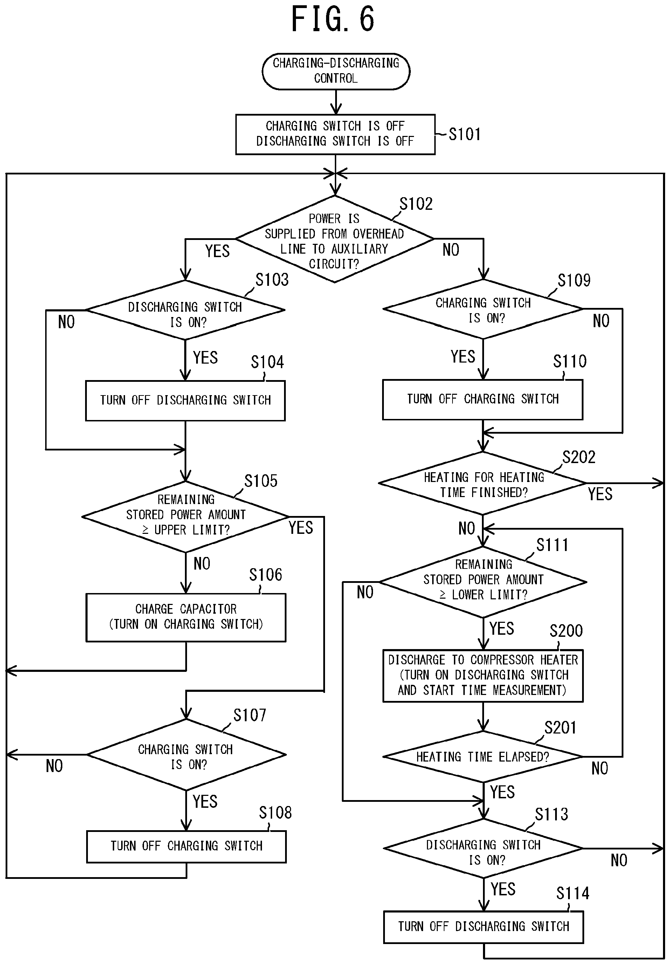

As illustrated in FIG. 6, when the remaining stored power amount is greater than or equal to the lower limit in the aforementioned step S 111 (Yes in step S111), the processor 323 turns on the discharging switch 370 and instructs the timer 400 to start the time measurement (step S200). Next, the processor 323 refers to a measurement result obtained by the timer 400 and determines whether a predetermined heating time as a time for heating the compressor 110 has elapsed from the time point at which the processor 323 instructed the timer 400 to start time measurement (step S201).

When the heating time has not elapsed (No in step S201), the processor 323 returns the processing to the aforementioned step S111. When the heating time has elapsed (Yes in step S201), the processor 323 shifts the processing to the aforementioned step S113.

When the charging switch 360 is in the off-state in the aforementioned step S109 (No in step S109) or when having ended the processing in the aforementioned step S110, the processor 323 determines whether heating of the compressor 110 for the heating time is completed (step S202). When already completed (Yes in step S202), the processor 323 returns the processing to the aforementioned step S102, and when not already finished (No in step S202), the processor 323 shifts the processing to the aforementioned step S111. Configurations and operations other than described above of the present embodiment are the same as those of Embodiment 1.

According to the present embodiment, a timing at which power supply from the capacitor 310 to the compressor heater 200 stops is determined based on the heating time. That is to say, when supplying of a required amount of heat to the compressor 110 is completed, power supply from the capacitor 310 to the compressor heater 200 stops prior to resumption of the power supply from the overhead line WR to the auxiliary circuit AP. The required amount of heat indicates an amount of heat that achieves, at the time point of activating the compressor 110, a temperature in the compressor 110 for facilitating gasification of the refrigerant.

This allows reduction of the storage capacity of the capacitor 310 to a minimum necessary amount, leading to reduction of the size of the capacitor 310 and reduction of power consumed thereby.

### Embodiment 3

Although the timer 400 measures elapsed time in Embodiment 2 described above, the timer 400 may measure clock time. Further, although a timing at which power supply to the compressor heater 200 stops is determined based on the measurement result obtained by the timer 400 in Embodiment 2 described above, a timing at which power supply to the compressor heater 200 starts may be determined based on the measurement result obtained by the timer 400. A case of employing such configuration is described below.

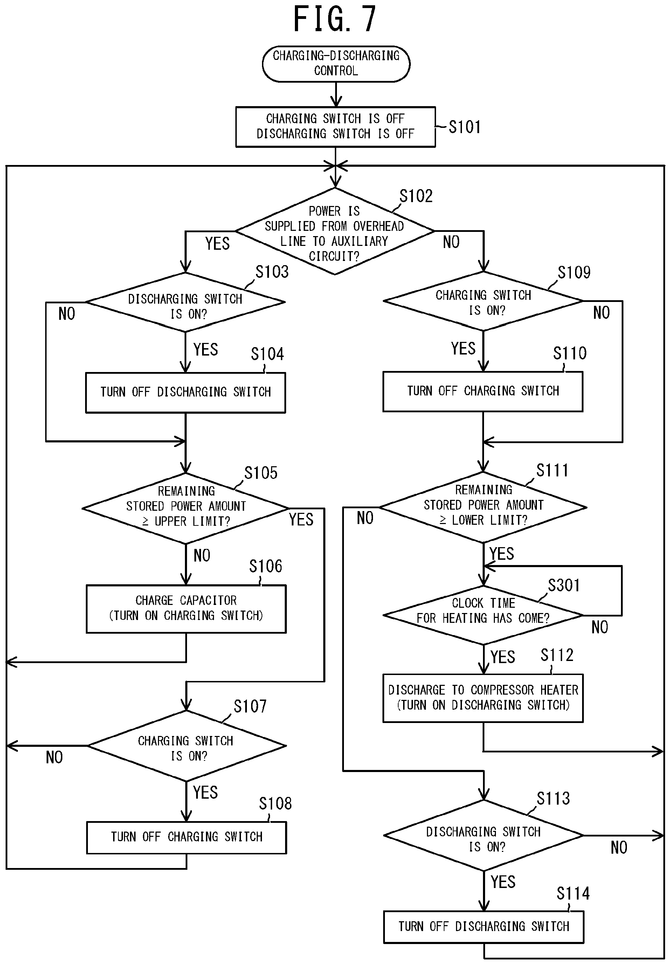

In the present embodiment, as illustrated in FIG. 7, when the remaining stored power amount in the capacitor 310 is greater than or equal to the lower limit in the aforementioned step S 111 (Yes in step S111), the processor 323 refers to the measurement result obtained by the timer 400 and determines whether a predetermined clock time for heating, as a clock time at which heating of the compressor 110 is to be started, has come (step S301).

Next, when the clock time for heating has not come (No in step S301), the processor 323 returns the processing to the determination processing in step S301. That is to say, the determination in step S301 is repeated until the clock time for heating comes. Then, when the clock time for heating has come (Yes in step S301), the processor 323 shifts the processing to the aforementioned step S112.

According to the present embodiment, heating of the compressor 110 need not be performed during a time period from when the power supply from the overhead line WR to the auxiliary circuit AP is interrupted until the clock time for heating comes. This allows reduction of the storage capacity of the capacitor 310 than in Embodiment 1, leading to reduction of the size of the capacitor 310 and reduction of power consumed thereby.

### Embodiment 4

In Embodiments 2 and 3 described above, a timing at which power supply from the capacitor 310 to the compressor heater 200 starts or stops is determined based on elapsed time or whether a predetermined clock time has come. However a timing at which power supply from the capacitor 310 to the compressor heater 200 starts may be determined based on a temperature of the compressor 110. A case of employing such configuration is described below.

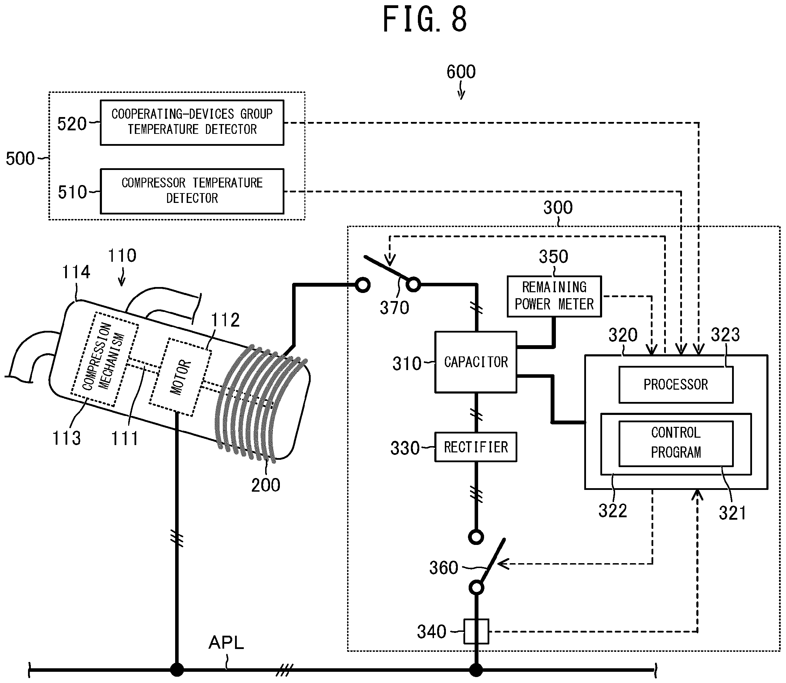

As illustrated in FIG. 8, the air conditioning apparatus 600 according to the present embodiment further includes a temperature detection device 500 that detects a temperature. The temperature detection device 500 includes a compressor temperature detector 510 that detects a temperature of the compressor 110 and a cooperating-devices group temperature detector 520 that detects temperatures of the cooperating devices group 120 illustrated in FIG. 2. The cooperating-devices group temperature detector 520 detects the temperatures of the condenser 121, the expander 122, the evaporator 123 and the refrigerant piping 124 illustrated in FIG. 2.

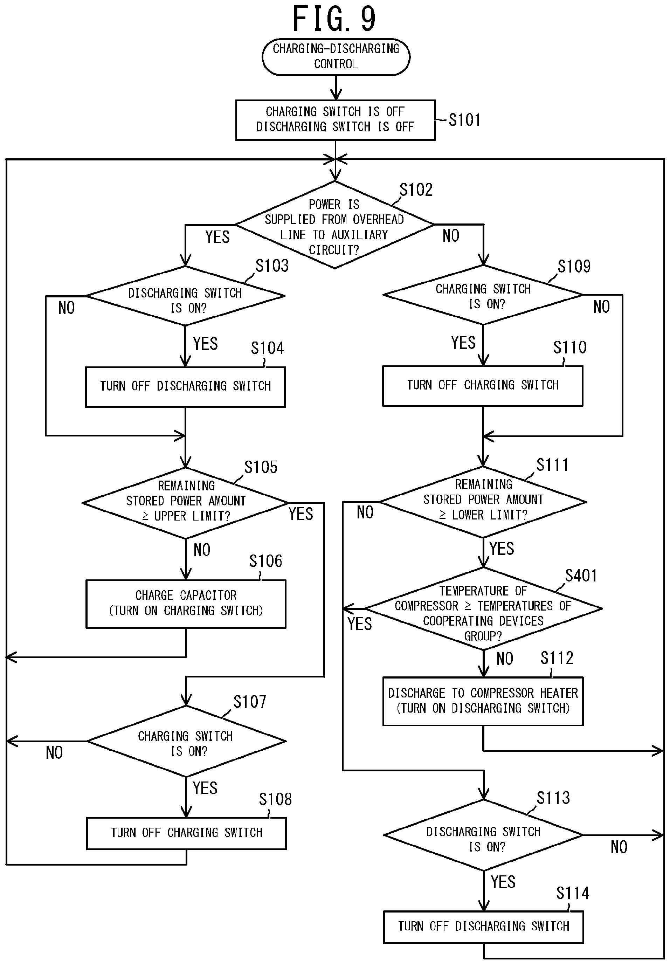

As illustrated in FIG. 9, when the remaining stored power amount in the capacitor 310 is greater than or equal to the lower limit in the aforementioned step S111 (Yes in step S111), the processor 323 determines, based on a detection result obtained by the temperature detection device 500, whether the temperature of the compressor 110 is higher than or equal to the temperatures of the cooperating devices group 120 (step S401).

Specifically, the processor 323 determines, in step S401, whether the temperature of the compressor 110 detected by the compressor temperature detector 510 is higher than or equal to each of the temperatures of the condenser 121, the expander 122, the evaporator 123 and the refrigerant piping 124 that are detected by the cooperating-devices group temperature detector 520.

Then, when the temperature of the compressor 110 is lower than the temperatures of the cooperating devices group 120 (No in step S401), the processor 323 turns on the discharging switch 370 to start discharging from the capacitor 310 to the compressor heater 200 (step S112).

On the other hand, when the temperature of the compressor 110 becomes higher than or equal to each of the temperatures of the condenser 121, the expander 122, the evaporator 123 and the refrigerant piping 124 (Yes in step S401), the processor 323 shifts the processing to the aforementioned step S113 and turns off the discharging switch 370 (step S114).

According to the present embodiment, even after interruption of power supply from the overhead line WR to the auxiliary circuit AP, heating of the compressor 110 is performed only when the temperature of the compressor 110 is lower than the temperatures of the cooperating devices group 120. This allows reduction of wasteful consumption of power stored in the capacitor 310.

Hereinafter this point is described in detail. Refrigerant has a characteristic of moving from a warm place to a cold place. Thus, the refrigerant is apt to accumulate in the compressor 110 when the temperature of the compressor 110 is lower than the temperatures of the cooperating devices group 120. To address such a case, heating of the compressor 110 is performed in the present embodiment to gasify the refrigerant in the compressor 110.

On the other hand, when the temperature of the compressor 110 is higher than or equal to the temperatures of the cooperating devices group 120, it is hard to say that the refrigerant is apt to accumulate in the compressor 110. In such a case, heating the compressor 110 has little significance. Thus, in the present embodiment in a case where the temperature of the compressor 110 reaches a temperature higher than or equal to the temperatures of the cooperating devices group 120, the discharging switch 370 is to be turned off even after power supply from the capacitor 310 to the compressor heater 200 starts.

Such configuration prevents unnecessary heating of the compressor 110 and allows reduction of wasteful consumption of power stored in the capacitor 310. Further, optimizing the power supplied to the compressor heater 200 in such a manner allows reduction of the storage capacity of the capacitor 310, leading to reduction of the size of the capacitor 310.

### Embodiment 5

Although a timing at which power supply to the compressor heater 200 starts is determined based on temperatures in Embodiment 4 described above, a timing at which power supply to the compressor heater 200 stops may be determined based on temperatures. A case of employing such configuration is described below.

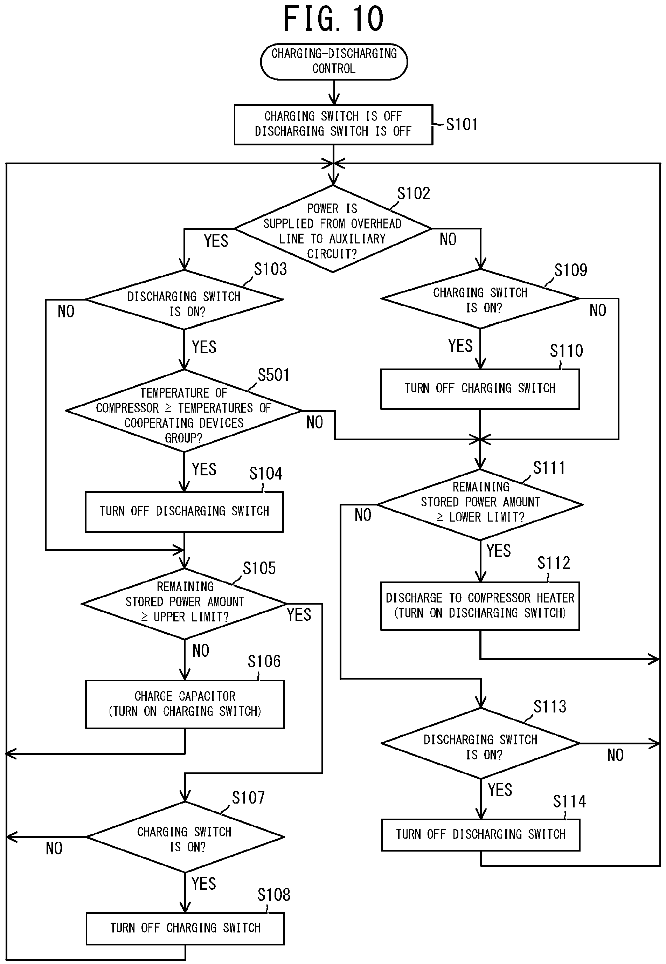

In the present embodiment, as illustrated in FIG. 10, when a determination is made that the discharging switch 370 is in the on-state in step S103 (Yes in step S103), the processor 323 determines, based on the detection result obtained by the temperature detection device 500 of FIG. 8, whether the temperature of the compressor 110 is higher than or equal to the temperatures of the cooperating devices group 120 (step S501).

When the temperature of the compressor 110 is higher than or equal to the temperatures of the cooperating devices group 120 (Yes in step S501), the processor 323 turns off the discharging switch 370 (step S104). When the temperature of the compressor 110 is lower than the temperatures of the cooperating devices group 120 (No in step S501), the processor 323 returns the processing to the aforementioned step S111.

According to the present embodiment, power supply from the capacitor 310 to the compressor heater 200 may be performed continuously until the temperature of the compressor 110 reaches a temperature higher than or equal to the temperatures of the cooperating devices group 120 even after power supply from the overhead line WR to the auxiliary circuit AP starts. That is to say, a time period from the start time of power supply from the overhead line WR to the auxiliary circuit AP by the pantograph PG of the railway vehicle TR being raised to (i) the activation time of the compressor 110 or (ii) a time immediately after activation of the compressor 110 may be effectively used to heat the compressor 110.

Then, upon confirmation that the temperature of the compressor 110 reaches a temperature higher than or equal to the temperatures of the cooperating devices group 120, that is, upon confirmation that a state of the compressor 110 becomes a state in which the refrigerant is less likely to accumulate in liquid form in the compressor 110, power supply from the capacitor 310 to the compressor heater 200 stops. This allows much more reduction in the probability of occurrence of malfunction in the compressor 110.

### Embodiment 6

In Embodiment 1 described above, the compressor heater 200 is attached to the housing 114 of the compressor 110 as illustrated in FIG. 3. However, any portion of the compressor 110 may be heated. A case of heating another portion of the compressor 110 is described below.

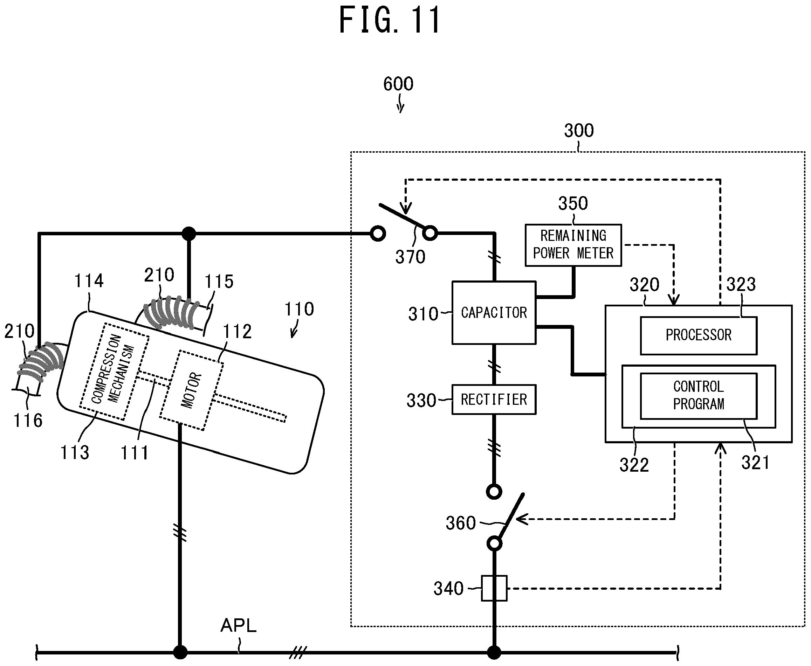

As illustrated in FIG. 11, the compressor 110 includes a suction pipe 115 that sucks in the refrigerant and an ejection pipe 116 that ejects the refrigerant sucked in from the suction pipe 115 and compressed. In the present embodiment, the compressor heater 210 is attached to the suction pipe 115 and the ejection pipe 116. The compressor heater 210 heats the suction pipe 115 and the ejection pipe 116.

Heating the suction pipe 115 and the ejection pipe 116 enables prevention of or reduction in accumulation of the liquid refrigerant in the housing 114. Further, even as the liquid refrigerant flows from the evaporator 123 of FIG. 2 to the compressor 110, heating the suction pipe 115 enables gasification of the refrigerant in the suction pipe 115.

Further, even as the liquid refrigerant flows from the condenser 121 of FIG. 2 to the compressor 110, heating the ejection pipe 116 enables gasification of the refrigerant in the ejection pipe 116. Thus, heating the ejection pipe 116 has significance especially in omitting the check valve 125 of FIG. 2.

According to the present embodiment, the following effects can be obtained. Each of the suction pipe 115 and the ejection pipe 116 has less heat capacity than the housing 114. Thus, the present embodiment enables heating of the suction pipe 115 and the ejection pipe 116 with power lower than that used to heat the housing 114.

This allows greater reduction of the storage capacity of the capacitor 310 than in Embodiment 1, leading to greater reduction of the size of the capacitor 310 and greater reduction of power consumed thereby.

Further, supplying to the compressor heater 210 power that is similar to the power supplied to the compressor heater 200 in Embodiment 1 enables heating of the suction pipe 115 and the ejection pipe 116 to a temperature higher than or equal to the temperature of the housing 114 of Embodiment 1.

While embodiments according to the present disclosure are described above, the present disclosure is not limited to the above-described embodiments, and modifications as described below may be made.

Aforementioned Embodiment 1 describes a case in which the cooperating devices group 120 includes the check valve 125 and the liquid line electromagnetic valve 126, as illustrated in FIG. 2. Inclusion of the check valve 125 and the liquid line electromagnetic valve 126 enhances the effect of preventing or reducing accumulation of refrigerant in the compressor 110 together with the compressor heater 200 that heats the compressor 110. However, the check valve 125 and the liquid line electromagnetic valve 126 are not necessarily included because the heating of the compressor 110 enables prevention of or reduction in accumulation of the refrigerant in the compressor 110. That is to say, the cooperating devices group 120 may have a configuration that does not include the check valve 125 and the liquid line electromagnetic valve 126. This simplifies the configuration of the cooperating devices group 120.

In Embodiment 1 described above, the capacitor 310 supplies power stored therein to the compressor heater 200 during interruption of power supply from the overhead line WR to the railway vehicle TR. However, the capacitor 310 may also supply power stored therein to the compressor heater 200 during the supply of power from the overhead line WR to the railway vehicle TR. Specifically, heating of the compressor 110 may also be performed during a time period from the start time of power supply from the overhead line WR to the railway vehicle TR by the pantograph PG of the railway vehicle TR being raised to (i) the activation time of the compressor 110 or (ii) a time immediately after activation of the compressor 110, as in the case described in Embodiment 4.

In Embodiments 2 and 3 described above, the timer 400 is provided as a structural element separately from the power storage device 300 as illustrated in FIG. 5. However, functions of the timer 400 may be implemented by software instead of hardware. In achieving the functions of the timer 400 using software, the functions of the timer 400 may be included in the controller 320.

In Embodiment 4 described above, the discharging switch 370 is turned on when the temperature of the compressor 110 is lower than all of the temperatures of the condenser 121, the expander 122, the evaporator 123 and the refrigerant piping 124 of FIG. 2. However, the discharging switch 370 may be set to be turned on when the temperature of the compressor 110 is lower than any one of the temperatures of the condenser 121, the expander 122, the evaporator 123 and the refrigerant piping 124 of FIG. 2. Further, the cooperating-devices group temperature detector 520 may detect at least one of the temperatures of the condenser 121, the expander 122, the evaporator 123 and the refrigerant piping 124 of FIG. 2 as a representative.

In Embodiment 5 described above, the discharging switch 370 is turned off when the temperature of the compressor 110 is higher than or equal to all of the temperatures of the condenser 121, the expander 122, the evaporator 123 and the refrigerant piping 124 of FIG. 2. As an alternative, the discharging switch 370 may be set to be turned off when the temperature of the compressor 110 is higher than or equal to any one of the temperatures of the condenser 121, the expander 122, the evaporator 123 and the refrigerant piping 124 of FIG. 2.

In Embodiments 1-6 described above, the auxiliary circuit AP that converts power supplied from the overhead line WR into a form consumable by the compressor 110 and supplies the converted power to the compressor 110 also achieves charging of the capacitor 310. However, charging of the capacitor 310 may be achieved by a main circuit that supplies power supplied from the overhead line WR to the traction motor for propelling the railway vehicle TR.

The railway vehicle TR as used herein is not limited to a train but includes a Shinkansen, a monorail, and other vehicles that travel along a track. Further, although the overhead line WR extends above the railway vehicle TR in FIG. 1, a position from which the overhead line WR extends in not particularly limited. The overhead line WR as used herein is not limited to an overhead line but includes an overhead rigid conduction line, a third rail, and other means for supplying power to the railway vehicle TR.

Installing the control program 321 illustrated in FIGS. 3, 5, 8 and 11 in a computer enables the computer to function as the controller 320. The control program 321 may be distributed via a communication network, or may be distributed by storing the program in a computer-readable recording medium such as an optical disk and a flash memory.

The foregoing describes some example embodiments for explanatory purposes. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

An air conditioning apparatus and an air conditioning method for a railway vehicle according to the present disclosure can be utilized for performing air conditioning of a passenger compartment of the railway vehicle.

### Reference Signs List

- 100: Air conditioning device
- 110: Compressor
- 111: Drive shaft
- 112: Motor
- 113: Compression mechanism
- 114: Housing
- 115: Suction pipe
- 116: Ejection pipe
- 120: Cooperating devices group
- 121: Condenser
- 122: Expander
- 123: Evaporator
- 124: Refrigerant piping
- 125: Check valve
- 126: Liquid line electromagnetic valve
- 127: Condenser fan
- 128: Evaporator fan
- 200, 210: Compressor heater
- 300: Power storage device
- 310: Capacitor
- 320: Controller
- 321: Control program
- 322: Memory
- 323: Processor
- 330: Rectifier
- 340: Electrification detector
- 350: Remaining power meter
- 360: Charging switch
- 370: Discharging switch
- 400: Timer (Timer means)
- 500: Temperature detection device
- 510: Compressor temperature detector
- 520: Cooperating-devices group temperature detector
- 600: Air conditioning apparatus for railway vehicle
- TR: Railway vehicle
- WR: Overhead line
- PG: Pantograph
- AP: Auxiliary circuit (Power supply circuit)
- APL: Power supply line

## Claims

1. A railway vehicle (TR) with an air conditioning apparatus (600) , the air conditioning apparatus (600) comprising:
a compressor (110) to compress refrigerant using power supplied from an overhead line (WR) to the railway vehicle (TR);
a cooperating devices group (120) to form, together with the compressor (110), a refrigeration cycle in which the refrigerant circulates, for performing air conditioning of a passenger compartment of the railway vehicle (TR);
a compressor heater (200) to heat the compressor (110) by power supplied to the compressor heater (200), further comprising a power storage device (300) configured to
(i) store, during a time period in which power is supplied from the overhead line (WR) to the railway vehicle (TR), a portion of the power, and
(ii) (ii) supply, during a time period in which power supply from the overhead line (WR) to the railway vehicle (TR) remains interrupted, power stored therein to the compressor heater (200), wherein
a power supply circuit (AP) is installed in the railway vehicle (TR), the power supply circuit (AP) converting the power supplied from the overhead line (WR) into a form consumable by the compressor (110) and supplying the converted power to the compressor (110), and
the power storage device (300)
is configured to detect whether power is supplied from the overhead line (WR) to the power supply circuit (AP),
and is configured to store power output from the power supply circuit (AP) when detecting that power is being supplied from the overhead line (WR) to the power supply circuit (AP), and
the power storage device (300) is configured to supply power stored therein to the compressor heater (200) when detecting that power supply from the overhead line (WR) to the power supply circuit (AP) is interrupted.

2. The railway vehicle (TR) with the air conditioning apparatus (600) according to claim 1, further comprising:
timer means (400) configured to determine the timing at which power supply from the power storage device (300) to the compressor heater (200) has to be stopped once an heating time has elapsed;
said heating time being measured from the start of the power supply from the power storage device (300) to the compressor heater (200).

3. The railway vehicle (TR) with the air conditioning apparatus (600) according to claim 1, further comprising:
a temperature detection device (500) to detect temperatures of the compressor (110) and the cooperating devices group (120), wherein
the power storage device (300) determines, based on a detection result obtained by the temperature detection device (500), a timing at which the power storage device (300) is to stop supplying the power stored therein to the compressor heater (200).

4. The railway vehicle (TR) with the air conditioning apparatus (600) according to any one of claims 1 to 3, wherein
the compressor (110) includes (i) a suction pipe (115) to suck in the refrigerant and (ii) an ejection pipe (116) to eject the refrigerant sucked in from the suction pipe (115) and compressed, and
the compressor heater (200) heats the suction pipe (115) and the ejection pipe (116).

5. An air conditioning method for a railway vehicle (TR) comprising an air condition apparatus according to any of the claims 1 to 4 and using
a compressor (110) to compress refrigerant,
a cooperating devices group (120) to form, together with the compressor (110), a refrigeration cycle in which the refrigerant circulates, for performing air conditioning of a passenger compartment of the railway vehicle (TR), and
the power supply circuit (AP) to convert power supplied from the overhead line (WR) to the railway vehicle (TR) into a form consumable by the compressor (110) and to supply the converted power to the compressor (110),
the air conditioning method comprising:
a detecting step of detecting whether power is supplied from the overhead line (WR) to the power supply circuit (AP);
a charging step of storing power output from the power supply circuit (AP) when detecting in the detecting step that power is being supplied from the overhead line (WR) to the power supply circuit (AP); and
a heating step of heating the compressor (110) by the power stored in the charging step when detecting in the detecting step that power supply from the overhead line (WR) to the power supply circuit (AP) is interrupted.

## Patentansprüche

1. Schienenfahrzeug (TR) mit einem Klimaanlagengerät (600), wobei das Klimaanlagengerät (600) umfasst:
einen Kompressor (110) zum Komprimieren von Kältemittel unter Verwendung von Energie, die dem Schienenfahrzeug (TR) von einer Oberleitung (WR) zugeführt wird;
eine Gruppe (120) von zusammenwirkenden Vorrichtungen, die zusammen mit dem Kompressor (110) einen Kältekreislauf bilden, in dem das Kältemittel umläuft, um eine Klimatisierung eines Fahrgastraums des Schienenfahrzeugs (TR) auszuführen;
eine Kompressor-Heizvorrichtung (200) zum Heizen des Kompressors (110) durch Energie, die der Kompressor-Heizvorrichtung (200) zugeführt wird,
ferner umfassend eine Energiespeichervorrichtung (300), die konfiguriert ist,
(i) während einer Zeitspanne, in der dem Schienenfahrzeug (TR) von der Oberleitung (WR) Energie zugeführt wird, einen Teil der Energie zu speichern, und
(ii) während einer Zeitspanne, in der die Energiezufuhr von der Oberleitung (WR) zum Schienenfahrzeug (TR) unterbrochen bleibt, der Kompressor-Heizvorrichtung (200) gespeicherte Energie zuzuführen, wobei
ein Versorgungsstromkreis (AP) im Schienenfahrzeug (TR) installiert ist, wobei der Versorgungsstromkreis (AP) die Energie, die von der Oberleitung (WR) zugeführt wird, in eine durch den Kompressor (110) verbrauchbare Form umsetzt und dem Kompressor (110) die umgesetzte Energie zuführt, und
wobei die Energiespeichervorrichtung (300) konfiguriert ist zu detektieren, ob dem Versorgungsstromkreis (AP) Energie von der Oberleitung (WR) zugeführt wird,
und konfiguriert ist, Energie, die vom Versorgungsstromkreis (AP) ausgegeben wird, zu speichern, wenn detektiert wird, dass dem Versorgungsstromkreis (AP) Energie von der Oberleitung (WR) zugeführt wird, und
die Energiespeichervorrichtung (300) konfiguriert ist, der Kompressor-Heizvorrichtung (200) gespeicherte Energie zuzuführen, wenn detektiert wird, dass Energiezufuhr von der Oberleitung (WR) zum Versorgungsstromkreis (AP) unterbrochen ist.

2. Schienenfahrzeug (TR) mit dem Klimaanlagengerät (600) nach Anspruch 1, ferner umfassend:
Zeitgebermittel (400), die konfiguriert sind, den Zeitpunkt zu bestimmen, zu dem eine Energiezufuhr von der Energiespeichervorrichtung (300) zur Kompressor-Heizvorrichtung (200) gestoppt werden muss, sobald eine Heizzeit verstrichen ist;
wobei die Heizzeit seit dem Start der Energiezufuhr von der Energiespeichervorrichtung (300) zur Kompressor-Heizvorrichtung (200) gemessen wird.

3. Schienenfahrzeug (TR) mit dem Klimaanlagengerät (600) nach Anspruch 1, ferner umfassend:
eine Temperaturdetektionsvorrichtung (500) zum Detektieren von Temperaturen des Kompressors (110) und der Gruppe (120) von zusammenwirkenden Vorrichtungen, wobei
die Energiespeichervorrichtung (300) auf der Basis eines Detektionsergebnisses, das durch die Temperaturdetektionsvorrichtung (500) erhalten wird, einen Zeitpunkt bestimmt, zu dem die Energiespeichervorrichtung (300) das Zuführen von darin gespeicherter Energie zur Kompressor-Heizvorrichtung (200) stoppen muss.

4. Schienenfahrzeug (TR) mit dem Klimaanlagengerät (600) nach einem der Ansprüche 1 bis 3, wobei
der Kompressor (110) (i) eine Ansaugleitung (115) zum Ansaugen des Kältemittels und (ii) eine Ausstoßleitung (116) zum Ausstoßen des Kältemittels, das von der Ansaugleitung (115) angesaugt und komprimiert wurde, umfasst, und
die Kompressor-Heizvorrichtung (200) die Ansaugleitung (115) und die Ausstoßleitung (116) heizt.

5. Klimatisierungsverfahren für ein Schienenfahrzeug (TR), das ein Klimaanlagengerät nach einem der Ansprüche 1 bis 4 umfasst und verwendet:
einen Kompressor (110) zum Komprimieren von Kältemittel,
eine Gruppe (120) von zusammenwirkenden Vorrichtungen, die zusammen mit dem Kompressor (110) einen Kältekreislauf bilden, in dem das Kältemittel umläuft, um eine Klimatisierung eines Fahrgastraums des Schienenfahrzeugs (TR) auszuführen, und
den Versorgungsstromkreis (AP) zum Umsetzen von Energie, die dem Schienenfahrzeug (TR) von der Oberleitung (WR) zugeführt wird, in eine durch den Kompressor (110) verbrauchbare Form und zum Zuführen der umgesetzten Energie zum Kompressor (110),
wobei das Klimatisierungsverfahren umfasst:
einen Detektionsschritt zum Detektieren, ob dem Versorgungsstromkreis (AP) von der Oberleitung (WR) Energie zugeführt wird;
einen Ladeschritt zum Speichern von Energie, die vom Versorgungsstromkreis (AP) ausgegeben wird, wenn im Detektionsschritt detektiert wird, dass dem Versorgungsstromkreis (AP) von der Oberleitung (WR) Energie zugeführt wird; und
einen Heizschritt zum Heizen des Kompressors (110) durch die Energie, die im Ladeschritt gespeichert wird, wenn im Detektionsschritt detektiert wird, dass Energiezufuhr von der Oberleitung (WR) zum Versorgungsstromkreis (AP) unterbrochen ist.

## Revendications

1. Véhicule ferroviaire (TR) avec un appareil de climatisation (600), l'appareil de climatisation (600) comprenant :
un compresseur (110) pour comprimer un réfrigérant en utilisant une énergie distribuée depuis une caténaire (WR) au véhicule ferroviaire (TR) ;
un groupe de dispositifs qui coopèrent (120) pour former, avec le compresseur (110), un cycle de réfrigération dans lequel le réfrigérant circule, pour réaliser une climatisation d'un compartiment passager du véhicule ferroviaire (TR) ;
un dispositif de chauffage de compresseur (200) pour chauffer le compresseur (110) par une énergie distribuée au dispositif de chauffage de compresseur (200),
comprenant en outre un dispositif de stockage d'énergie (300) configuré pour
(i) stocker, pendant une période de temps au cours de laquelle une énergie est distribuée depuis la caténaire (WR) au véhicule ferroviaire (TR), une partie de l'énergie, et
(ii) distribuer, pendant une période de temps au cours de laquelle une distribution d'énergie depuis la caténaire (WR) au véhicule ferroviaire (TR) reste interrompue, une énergie stockée à l'intérieur de celui-ci au dispositif de chauffage de compresseur (200), dans lequel
un circuit de distribution d'énergie (AP) est installé dans le véhicule ferroviaire (TR), le circuit de distribution d'énergie (AP) convertissant l'énergie distribuée depuis la caténaire (WR) dans une forme consommable par le compresseur (110) et distribuant l'énergie convertie au compresseur (110), et
le dispositif de stockage d'énergie (300)
est configuré pour détecter si de l'énergie est ou non distribuée depuis la caténaire (WR) au circuit de distribution d'énergie (AP),
et est configuré pour stocker une énergie délivrée depuis le circuit de distribution d'énergie (AP) lors de la détection qu'une énergie est en cours de distribution depuis la caténaire (WR) au circuit de distribution d'énergie (AP), et
le dispositif de stockage d'énergie (300) est configuré pour distribuer une énergie stockée à l'intérieur de celui-ci au dispositif de chauffage de compresseur (200) lors de la détection qu'une distribution d'énergie depuis la caténaire (WR) au circuit de distribution d'énergie (AP) est interrompue.

2. Véhicule ferroviaire (TR) avec l'appareil de climatisation (600) selon la revendication 1, comprenant en outre :
un moyen de temporisation (400) configuré pour déterminer le moment auquel une distribution d'énergie depuis le dispositif de stockage d'énergie (300) au dispositif de chauffage de compresseur (200) doit être arrêtée une fois qu'un temps de chauffage s'est écoulé ;
ledit temps de chauffage étant mesuré à partir du début de la distribution d'énergie depuis le dispositif de stockage d'énergie (300) au dispositif de chauffage de compresseur (200).

3. Véhicule ferroviaire (TR) avec l'appareil de climatisation (600) selon la revendication 1, comprenant en outre :
un dispositif de détection de température (500) pour détecter des températures du compresseur (110) et du groupe de dispositifs qui coopèrent (120), dans lequel
le dispositif de stockage d'énergie (300) détermine, sur la base d'un résultat de détection obtenu par le dispositif de détection de température (500), un moment auquel le dispositif de stockage d'énergie (300) doit arrêter la distribution de l'énergie stockée à l'intérieur de celui-ci au dispositif de chauffage de compresseur (200).

4. Véhicule ferroviaire (TR) avec l'appareil de climatisation (600) selon l'une quelconque des revendications 1 à 3, dans lequel
le compresseur (110) inclut (i) un tuyau d'aspiration (115) pour aspirer le réfrigérant et (ii) un tuyau d'éjection (116) pour éjecter le réfrigérant aspiré depuis le tuyau d'aspiration (115) et comprimé, et
le dispositif de chauffage de compresseur (200) chauffe le tuyau d'aspiration (115) et le tuyau d'éjection (116).

5. Méthode de climatisation pour un véhicule ferroviaire (TR) comprenant un appareil de climatisation selon l'une quelconque des revendications 1 à 4 et utilisant
un compresseur (110) pour comprimer un réfrigérant,
un groupe de dispositifs qui coopèrent (120) pour former, avec le compresseur (110), un cycle de réfrigération dans lequel le réfrigérant circule, pour réaliser une climatisation d'un compartiment passager du véhicule ferroviaire (TR), et
le circuit de distribution d'énergie (AP) pour convertir une énergie distribuée depuis la caténaire (WR) au véhicule ferroviaire (TR) dans une forme consommable par le compresseur (110) et pour distribuer l'énergie convertie au compresseur (110),
la méthode de climatisation comprenant :
une étape de détection pour détecter si une énergie est ou non distribuée depuis la caténaire (WR) au circuit de distribution d'énergie (AP) ;
une étape de chargement pour stocker de l'énergie délivrée depuis le circuit de distribution d'énergie (AP) lors de la détection, à l'étape de détection, qu'une énergie est en cours de distribution depuis la caténaire (WR) au circuit de distribution d'énergie (AP) ; et
une étape de chauffage pour chauffer le compresseur (110) par l'énergie stockée à l'étape de chargement lors de la détection, à l'étape de détection, qu'une distribution d'énergie depuis la caténaire (WR) au circuit de distribution d'énergie (AP) est interrompue.
